# EUROPEAN PATENT SPECIFICATION

(11) **EP 4 123 106 B1**
(45) Date of publication and mention of the grant of the patent: **28.10.2026**
(21) Application number: 21771840.2
(22) Date of filing: 05.03.2021
(51) Int. Cl.: E04G 23/00, G06T 19/00

(54) **IMAGE PROCESSING DEVICE, IMAGE PROCESSING METHOD, AND IMAGE PROCESSING PROGRAM**
BILDVERARBEITUNGSVORRICHTUNG, BILDVERARBEITUNGSVERFAHREN UND BILDVERARBEITUNGSPROGRAMM
DISPOSITIF, PROCÉDÉ ET PROGRAMME DE TRAITEMENT D'IMAGE

(30) Priority: 16.03.2020 JP 2020045236
(43) Date of publication of application: 25.01.2023
(73) Proprietor: FUJIFILM Corporation, Tokyo 106-8620 (JP)
(72) Inventor: KIKUCHI, Hiroaki, Tokyo 106-8620 (JP)
(74) Representative: Meissner Bolte Partnerschaft mbB
(86) International application number: PCT/JP2021/008646
(87) International publication number: WO 2021/187157

(56) References cited:
- JP-A- 2004 054 852
- JP-A- 2017 168 077
- JP-A- 2019 049 951
- JP-A- 2019 094 620
- JP-A- 2019 159 904
- JP-A- H07 152 925
- US-A1- 2019 026 955

## Description

### BACKGROUND OF THE INVENTION

### 1. Field of the Invention

The present invention relates to a technique for handling a captured image of a building, a three-dimensional model of the building, and defect information.

### 2. Description of the Related Art

For example, JP2019-020348A describes a technique for handling a three-dimensional model and defect information of a building. In the technique, a three-dimensional laser scanner is used to acquire three-dimensional point cloud data of an inner surface of tunnel lining, and this data is used to generate a lining development diagram. US 2019/026955 A1 (OGATA KORETAKA [JP] ET AL), 24 January 2019, describes generating a 3D mesh from multiple inspection images of a structure, unfolding it into a 2D development/panoramic view, and mapping user-entered annotations (e.g. "CRACK") and their positions between the 2D view and the underlying images for inspection support.

### SUMMARY OF THE INVENTION

However, the technique described in JP2019-020348A, which uses a laser scanner, makes it difficult to acquire image data of a photographic subject and provides low resolution of a point cloud. This makes it difficult to efficiently handle captured images of a building, a three-dimensional model of the building, and defect information.

The present invention is defined by the appended independent claims. The present invention has been made in view of such circumstances, and an embodiment according to a technique disclosed herein provides an image processing apparatus, an image processing method, and an image processing program that provide efficient handling of a captured image of a building, a three-dimensional model of the building, and defect information.

### BRIEF DESCRIPTION OF THE DRAWINGS

Fig. 1 is a diagram illustrating a schematic configuration of an image processing system according to an embodiment;
Fig. 2 is a diagram illustrating a functional configuration of a processing unit;
Fig. 3 is a diagram illustrating information stored in a storage device;
Fig. 4 is a flowchart illustrating processing of an image processing method;
Fig. 5 is a diagram illustrating how an image group is acquired;
Fig. 6 is a diagram illustrating an example of defect information;
Figs. 7A and 7B are diagrams illustrating examples of a three-dimensional model;
Figs. 8A, 8B, and 8C are diagrams illustrating how a development condition is set for the three-dimensional model;
Fig. 9 is a diagram illustrating a two-dimensional image into which the three-dimensional model is developed;
Fig. 10 is a diagram illustrating a leg viewed from the side corresponding to a left side surface;
Fig. 11 is a diagram illustrating two-dimensional development with normal directions aligned;
Figs. 12A, 12B, and 12C are diagrams illustrating how two-dimensional development is performed using meshes having a designated width;
Figs. 13A, 13B, and 13C are other diagrams illustrating how two-dimensional development is performed using meshes having a designated width;
Fig. 14 is a diagram illustrating an edge designated in the three-dimensional point cloud data;
Figs. 15A and 15B are diagrams illustrating how a composite image is generated;
Fig. 16 is a diagram illustrating a two-dimensional image to which the composite image is mapped;
Fig. 17 is a diagram illustrating a three-dimensional model to which the composite image is mapped; and
Fig. 18 is a flowchart illustrating a process using a generated three-dimensional model.

### DESCRIPTION OF THE PREFERRED EMBODIMENTS

An embodiment of an image processing apparatus, an image processing method, and an image processing program according to the present invention is as follows. In the description, reference is made to the accompanying drawings as necessary.

### [Configuration of Image Processing System]

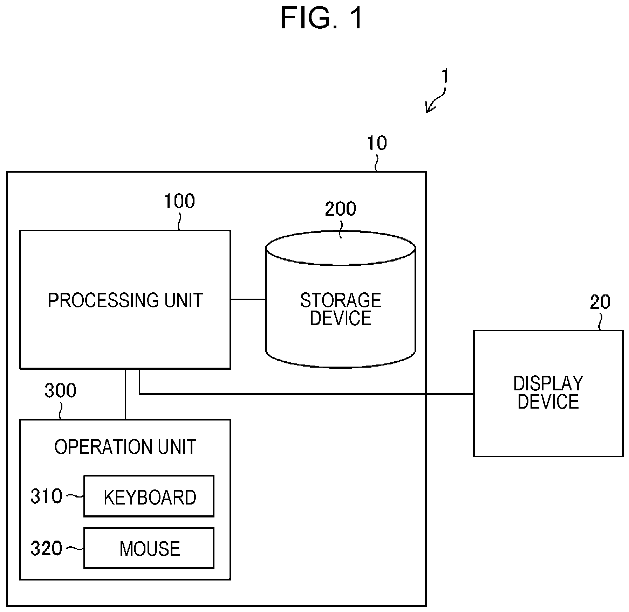

Fig. 1 is a block diagram illustrating a schematic configuration of an image processing system 1 (image processing apparatus). The image processing system 1 is a system including an image processing apparatus 10 (image processing apparatus) and a display device 20 (display device; monitor) and configured to extract defect information from a plurality of images acquired by capturing images of parts of a photographic subject (building), create a three-dimensional model, develop the three-dimensional model into a two-dimensional image, and perform other processing. The image processing system 1 can be configured using a device (information terminal) such as a personal computer, a tablet terminal, or a smartphone. The elements of the image processing system 1 may be housed in a single housing or may be housed in independent housings. Alternatively, the elements may be arranged in separate locations and connected to each other via a network.

### [Configuration of Image Processing Apparatus]

The image processing apparatus 10 includes a processing unit 100, a storage device 200, and an operation unit 300, and these units are connected to each other to transmit and receive necessary information.

### [Configuration of Processing Unit]

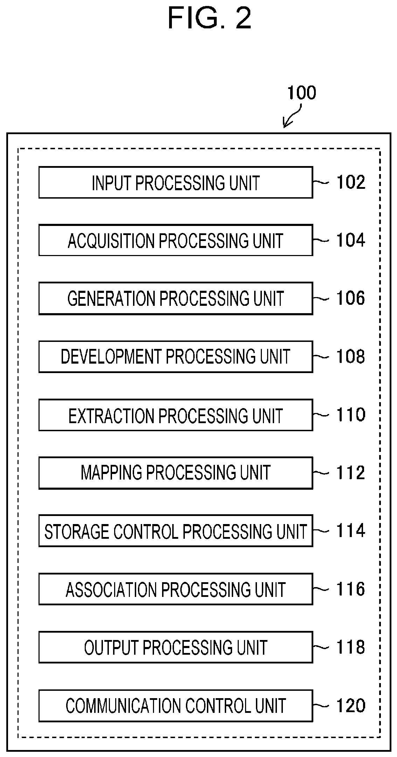

Fig. 2 is a diagram illustrating a configuration of the processing unit 100 (processor). The processing unit 100 includes an input processing unit 102, an acquisition processing unit 104, a generation processing unit 106, a development processing unit 108, an extraction processing unit 110, a mapping processing unit 112, a storage control processing unit 114, an association processing unit 116, an output processing unit 118, and a communication control unit 120, and is configured to perform acquisition of a captured image, creation of a three-dimensional model, development of the three-dimensional model into a two-dimensional image, mapping of defect information, and other processing. Details of processes performed by these units will be described below.

The functions of the processing unit 100 described above can be implemented using various processors and a recording medium. The various processors also include, for example, a central processing unit (CPU), which is a general-purpose processor that executes software (program) to implement various functions, a graphics processing unit (GPU), which is a processor specialized in image processing, and a programmable logic device (PLD) such as a field programmable gate array (FPGA), which is a processor whose circuit configuration is changeable after manufacture.

Each function may be implemented by one processor, or may be implemented by a plurality of processors of the same type or different types (for example, a plurality of FPGAs, a combination of a CPU and an FPGA, or a combination of a CPU and a GPU). Alternatively, a plurality of functions may be implemented by one processor. More specifically, the hardware structure of the various processors is an electric circuit (circuitry) in which circuit elements such as semiconductor elements are combined.

When the processor or electric circuit described above executes software (program), codes of the software to be executed, which are readable by a computer (for example, various processors and electric circuits constituting the processing unit 100, and/or a combination thereof), are stored in a non-transitory recording medium (memory) such as a ROM, and the computer refers to the software. At the time of execution, information stored in the storage device is used as necessary. At the time of execution, for example, a random access memory (RAM; memory) is used as a temporary storage area.

Some or all of the functions of the processing unit 100 may be implemented by a server (processor) on a network, and the image processing apparatus 10 may input data, perform communication control, display a result, and perform other processing. In this case, an Application Service Provider system including the server on the network is constructed.

### [Configuration of Storage Unit]

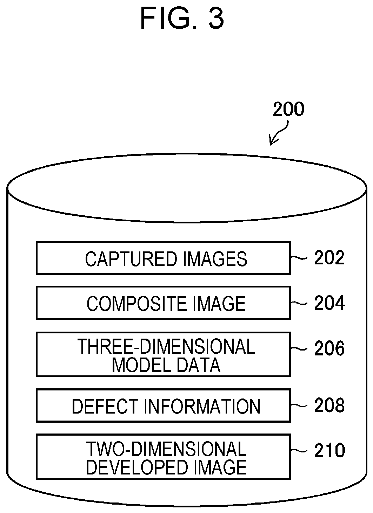

The storage device 200 (storage device; memory) is constituted by a non-transitory recording medium such as a compact disk (CD), a digital versatile disk (DVD), a hard disk, or various semiconductor memories, and a control unit thereof, and stores pieces of information illustrated in Fig. 3 in association with each other. Captured images 202 are a plurality of images obtained by capturing images of a building and may include a plurality of image groups having different dates and times of capture. A composite image 204 is a combined image (a set of images) corresponding to a specific member, which is generated from the captured images. Three-dimensional model data 206 (three-dimensional model) is a three-dimensional model of the building, which is created on the basis of the captured images, and members constituting the building are specified. The three-dimensional model data 206 is associated with captured images, a composite image, defect information, and the like. Defect information 208 (defect information) is information indicating defects of the building, which are extracted from the captured images. A two-dimensional developed image 210 (two-dimensional image) is an image obtained by two-dimensionally developing a three-dimensional model of the building.

In addition to the pieces of information described above, camera parameters (such as a focal length, an image size of an image sensor, and a pixel pitch) necessary when Structure from Motion (SfM) described below is applied may be stored in the storage device 200.

### [Configuration of Operation Unit]

The operation unit 300 includes a keyboard 310 and a mouse 320. The user can use these devices to perform operations necessary for image processing according to the present invention. With the use of a touch panel device, the display device 20 may be used as an operation unit.

### [Display Device]

The display device 20 (display device) is a device such as a liquid crystal display, for example, and is capable of displaying information on the captured images, the defect information, the three-dimensional model, the two-dimensional image, and the like that are acquired.

### [Procedure of Image Processing]

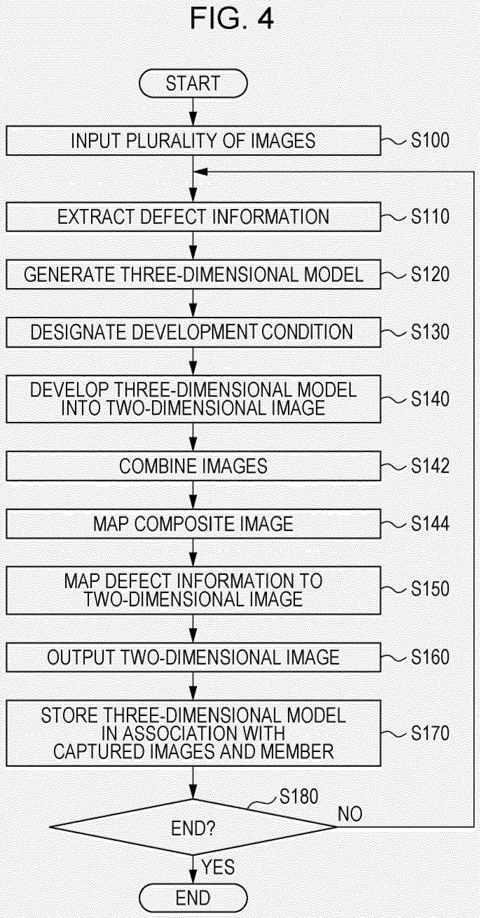

Fig. 4 is a flowchart illustrating a procedure of an image processing method according to the present invention.

### [Input of Image]

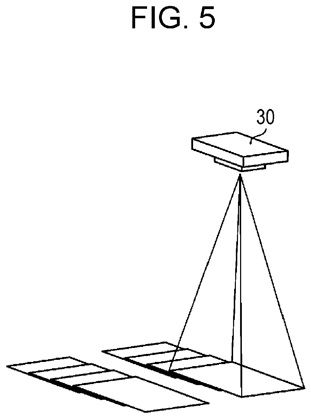

The input processing unit 102 (processor) inputs a plurality of images obtained by capturing images of a building as a photographic subject (step S100: input process or input step). The building (architectural object or structure) is, for example, a bridge, a road, or the like, or may be another building. The input processing unit 102 may input images stored in the storage device 200 as the captured images 202, or may input images via a recording medium or a network (not illustrated). These images can be captured by a flying object such as a drone, a robot having a moving function, or the like with movement of the viewpoint (or may be captured by the user). The images to be captured need not be stereo images. It is preferable that images have a large number of common feature points to create a three-dimensional model and combine the images. Thus, it is preferable that adjacent images overlap each other sufficiently (for example, 80% or more of the areas). Fig. 5 is a diagram illustrating how such overlapping images are captured with a camera 30.

### [Extraction of Defects]

The extraction processing unit 110 (processor) extracts defect information of the building on the basis of the plurality of input images (step S110: extraction process or extraction step). In the extraction process, the extraction processing unit 110 can extract at least one of the type of a defect, the number of defects, the size of the defect, the degree of the defect, or the change in the degree of the defect over time as defect information.

The extraction processing unit 110 can extract the defect information using various methods. For example, a cracking detection method described in JP4006007B or a method for detecting rust and scale described in JP2010-538258A can be used. Alternatively, the extraction processing unit 110 can extract the defect information using a machine learning method. For example, a learning machine such as a deep neural network (DNN) is generated by machine learning using, as training data, images to which types, sizes, or the like of defects are assigned as labels, and defects can be detected using the generated learning machine.

The extraction processing unit 110 may extract defect information from each individual captured image and combine corresponding pieces of information into one piece, or may extract defect information from one image obtained by combining a plurality of captured images. Defects can be represented as vectors each having a start point and a termination point. In this case, as described in WO2017/110279A, a hierarchical structure between the vectors may be taken into account.

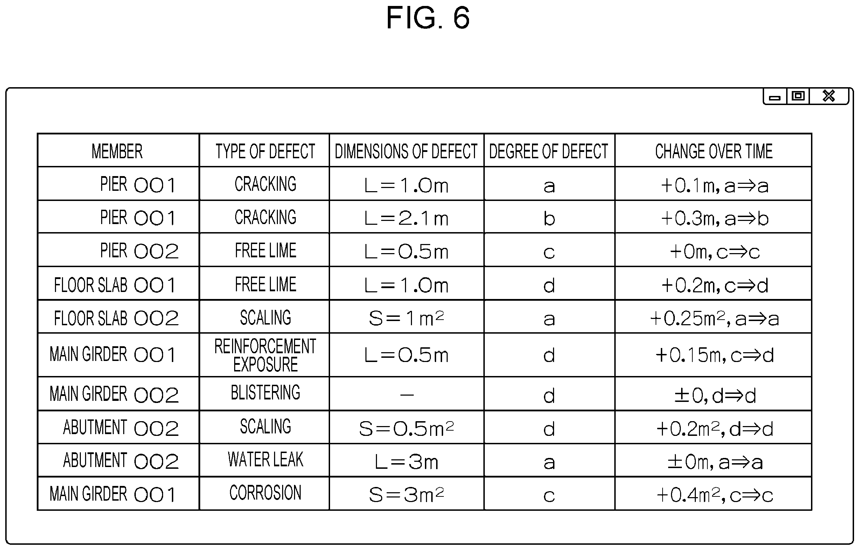

Fig. 6 is a diagram illustrating an example of defect information that is extracted. The extraction processing unit 110 can store the extracted defect information in the storage device 200 as the defect information 208. The defect information can be mapped to a two-dimensional developed image or a three-dimensional model of the building (see step S150 or the like).

### [Creation of Three-Dimensional Model]

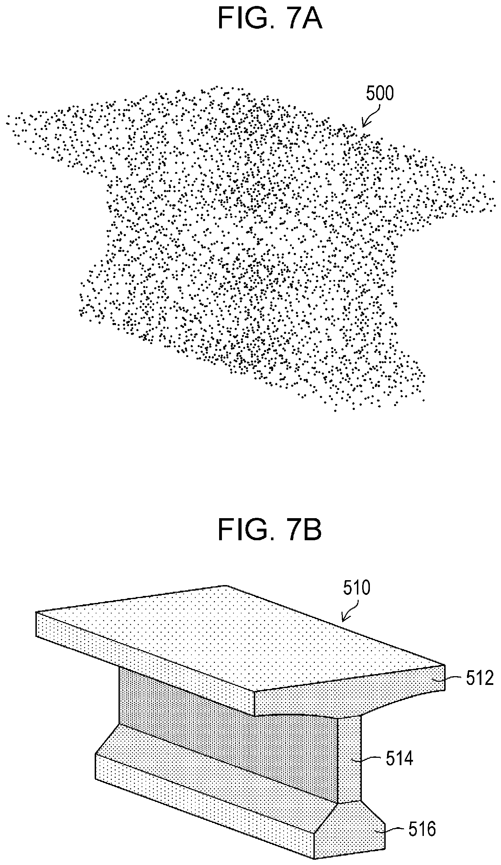

The generation processing unit 106 (processor) creates a three-dimensional model of the building on the basis of the plurality of input images (step S120: generation process or generation step). The three-dimensional model includes various models, such as a three-dimensional point cloud model, a three-dimensional polygon model created based on the three-dimensional point cloud model, a three-dimensional mesh model, a three-dimensional surface model, and models obtained by texture-mapping an image to these models. The generation processing unit 106 can create a three-dimensional model using, for example, a Structure from Motion (SfM) method. SfM is a method of restoring a three-dimensional shape from multi-view images. For example, feature points are calculated by an algorithm such as scale-invariant feature transform (SIFT), and three-dimensional positions of a point cloud are calculated using the principle of triangulation with the calculated feature points as clues. Specifically, straight lines are drawn from the camera to the feature points using the principle of triangulation, and the intersection point of two straight lines passing through the corresponding feature points is the restored three-dimensional point. This operation is performed for each of the detected feature points, and, as a result, the three-dimensional positions of the point cloud can be obtained. Figs. 7A and 7B are diagrams illustrating examples of a three-dimensional model. Fig. a diagram illustrating a point cloud 500 (an example of a point cloud). While size is not calculated by SfM, it is possible to perform association with the actual scale by, for example, performing comparison with a member having known dimensions or performing imaging with a scaler having a known dimension installed on the photographic subject.

The generation processing unit 106 applies, for example, a triangulated irregular network (TIN) model to the data of the point cloud obtained in the way described above to approximate the surface of the building with triangles, and can obtain another three-dimensional model (a polygon model, a mesh model, a surface model, a solid model, or the like) on the basis of the result. In the three-dimensional solid model among these models, the three-dimensional shape of a building is constructed as a combination of solid three-dimensional members such as blocks. To obtain the solid model, the user may designate "which range of the point cloud belongs to the same surface" via the operation unit 300, and the generation processing unit 106 may use the result. Alternatively, the generation processing unit 106 may use an algorithm such as random sample consensus (RANSAC) to estimate points belonging to the same surface and automatically generate the solid model without the user's operation. To generate the solid model, the generation processing unit 106 may use information such as the three-dimensional positions, colors (R, G, and B), and luminance of the point cloud and a change in the information.

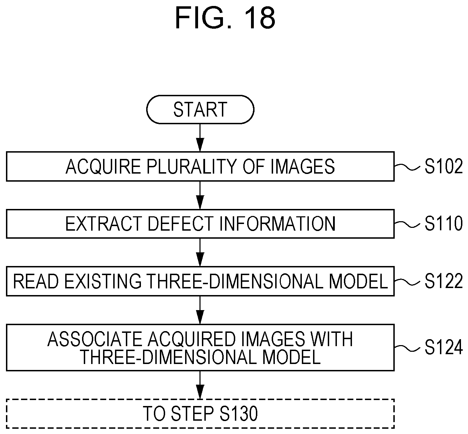

If a three-dimensional model has already been generated or acquired by previous inspection or the like, the generation processing unit 106 may read the model (see Fig. 18 and the description related to Fig. 18 described below).

### [Specification of Members]

The generation processing unit 106 (processor) preferably specifies members constituting the building in the three-dimensional model (specification process or specification step). That is, the generation processing unit 106 preferably specifies "to which member of the building each region of the three-dimensional model corresponds". The generation processing unit 106 may specify the members in accordance with the user's operation (for example, designating a range constituting one member with the mouse 320) or may specify the members without the user specifying the members. When specifying a member, the generation processing unit 106 may use information on the shape and dimensions of the member. For example, information such as information indicating that "a member extending two-dimensionally in a horizontal plane and having an area equal to or greater than a threshold is a floor slab" or information indicating that "a member attached to a floor slab and extending one-dimensionally is a main girder" can be used. Further, the generation processing unit 106 may specify the members using a learning machine such as a DNN configured by machine learning in which members constituting a three-dimensional model are given as correct labels. Fig. 7B is a diagram illustrating an example of a three-dimensional model in which members are specified. In the illustrated example, a three-dimensional model 510 of a bridge is constituted by members, namely, a floor slab 512, a wall 514, and a leg 516.

### [Reconstruction of Three-Dimensional Model]

Depending on the image-capturing conditions or the state of the photographic subject, a sufficient number of feature points are not acquired from captured images, and as a result, an accurate model cannot be generated (for example, one surface is incorrectly divided into a plurality of portions, or portions that would be on different surfaces are recognized as being included in the same surface). Accordingly, the generation processing unit 106 (processor) can reconstruct the three-dimensional model in response to an operation (for example, an operation of designating regions that are included in the same surface) performed by the user (reconstruction process or reconstruction step). Such reconstruction enables the user to obtain an appropriate three-dimensional model.

### [Development of Three-Dimensional Model into Two-Dimensional Image]

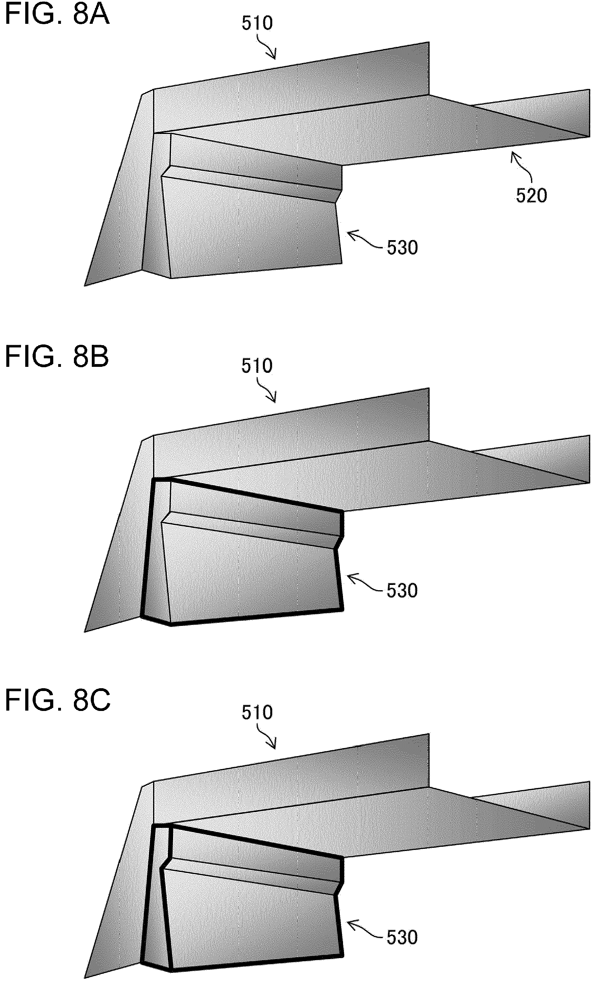

The development processing unit 108 (processor) designates a condition (development condition) for developing the generated three-dimensional model into a two-dimensional image (step S130: designation process or designation step). According to the invention, the development processing unit 108 can designate a range of development and an edge for development (the boundary of surfaces constituting the three-dimensional model) in accordance with an operation performed by the user. The development processing unit 108 may designate the development condition without the user's operation. Figs. 8A, 8B, and 8C are diagrams illustrating how a development condition is designated for a three-dimensional model. In Fig. 8A, the three-dimensional model 510 (part of the bridge) is constituted by members such as a floor slab 520 and a leg 530. Fig. 8B illustrates designation of the leg 530 (portion indicated by thick lines) as the development range in accordance with a selection operation with the mouse 320, for example. Fig. 8C illustrates designation of the development range and an edge (portions both indicated by thick lines). The development range may be part or the whole of the three-dimensional model. The designation described above enables the user to develop a desired range with a desired edge. In addition, no need exists to develop an unnecessary portion. This can reduce a load on the system due to the development process.

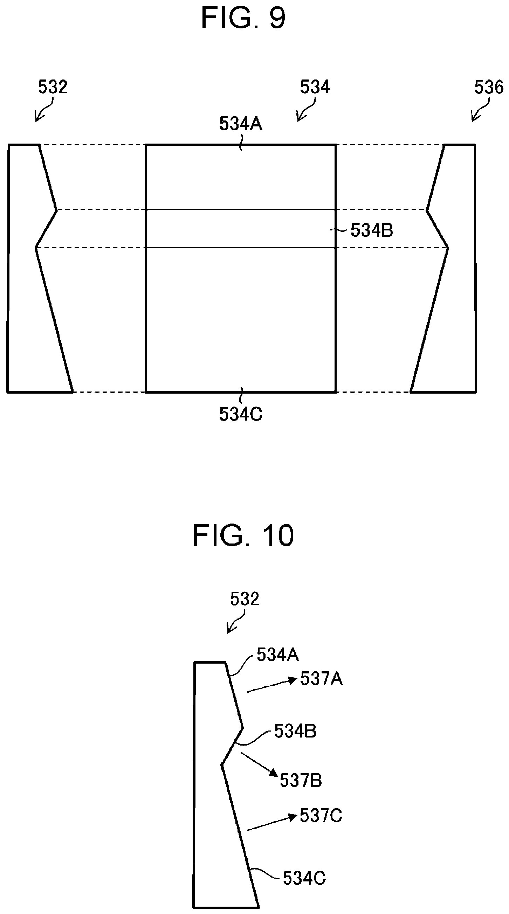

The development processing unit 108 develops the three-dimensional model into a two-dimensional image under the designated condition (step S140: development process or development step). Fig. 9 is a diagram illustrating that the designated range (the leg 530) of the three-dimensional model 510 illustrated in Fig. 8C is developed along the designated edge. In Fig. 9, the designated range is developed into a left side surface 532, a wall surface 534, and a right side surface 536.

### [Development with Normal Directions Aligned]

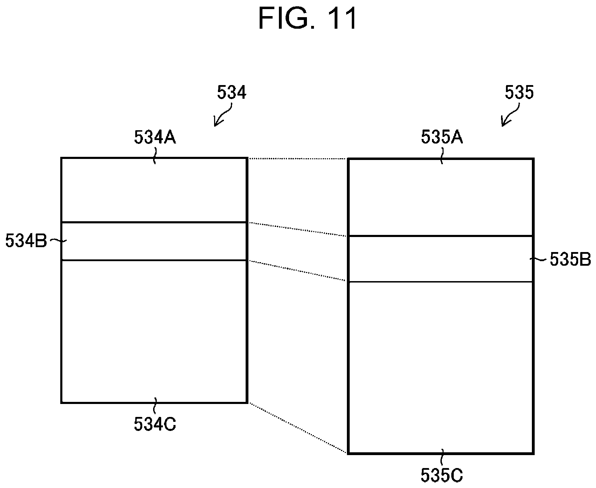

Fig. 10 is a diagram illustrating the leg 530 viewed from the side corresponding to the left side surface 532. The wall surface 534 is constituted by regions 534A, 534B, and 534C whose normal directions are directions indicated by vectors 537A, 537B, and 537C, respectively, the normal directions being different from each other. In this case, the development processing unit 108 can align the normal directions of regions constituting a two-dimensional image. For example, as illustrated in Fig. 11, the development processing unit 108 can develop the wall surface 534 to produce a wall surface 535 constituted by regions 535A, 535B, and 535C with the direction perpendicular to the plane of the figure (the side closer to the viewer) being represented by a normal vector. The development described above enables the user to observe individual regions of a subject from the same direction.

### [Division-Based Development of Curved Surface]

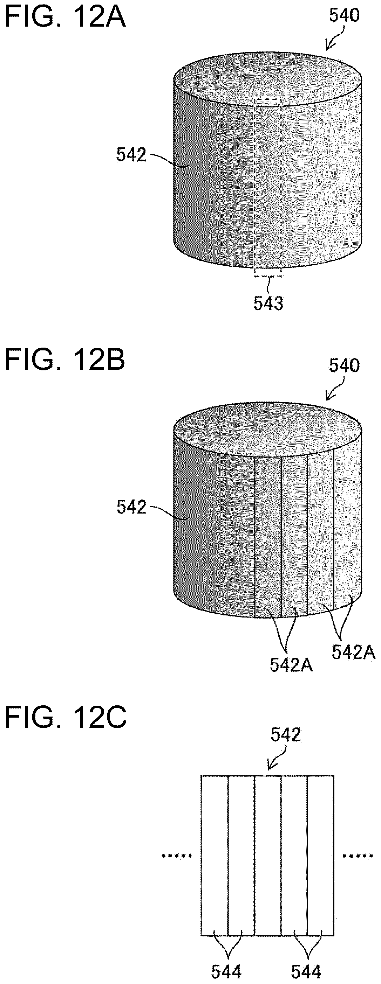

The development processing unit 108 can develop a three-dimensional model such that a portion of the three-dimensional model including a curved surface is divided into planes having a designated size. Figs. 12A, 12B, and 12C are diagrams illustrating a designation of the size of a plane (the width of a mesh). Fig. 12A is a diagram illustrating that the width of a plane (the width of a portion indicated by a dotted-line box) is designated in a side surface 542 of a cylindrical three-dimensional model 540 by a rectangular region 543. Fig. 12B illustrates that a portion of the side surface 542 is divided into regions 542A having the designated width. The development processing unit 108 can designate the size of a plane for division, such as the rectangular region 543, in response to selection by the user with the mouse 320, for example. Fig. 12C illustrates that the side surface 542 is divided into a plurality of planes 544 having the designated size (width) and two-dimensionally developed.

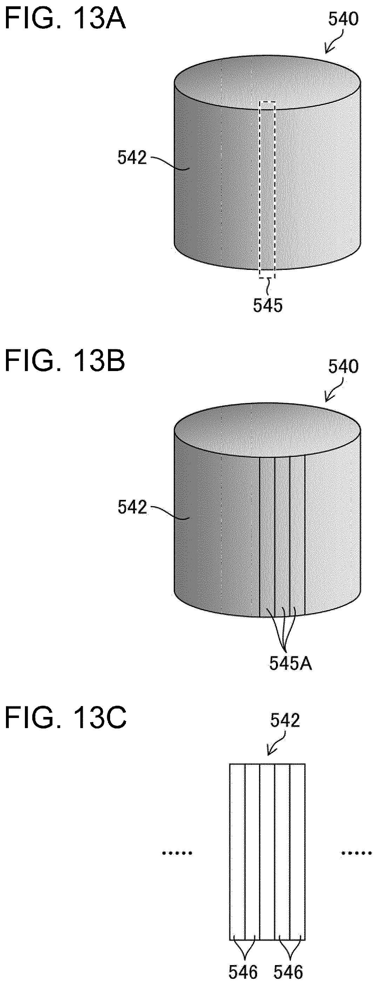

Figs. 13A, 13B, and 13C are diagrams illustrating another designation of the size of a plane (the width of a mesh). Fig. 13A is a diagram illustrating that the width of a plane is designated for the three-dimensional model 540 by a rectangular region 545. The rectangular region 545 has a narrower width than the rectangular region 543 illustrated in Fig. 12A. Likewise, Fig. 13B illustrates that a portion of the side surface 542 is divided into regions 545A having a designated width, and Fig. 13C illustrates that the side surface 542 is divided into a plurality of planes 546 having the designated size (width) and two-dimensionally developed.

The development processing unit 108 can designate the size of a plane (the width of a mesh) in consideration of the accuracy of development, the calculation load, and the like. The size of a plane (the width of a mesh) may be changed for each region of a three-dimensional model. For example, it is possible to increase the width of meshes (coarse meshes) for regions having a flat shape and a nearly flat shape and decrease the width of meshes (fine meshes) for a region having a high curvature. The designation of the width of meshes allows appropriate plane development in consideration of the shape of the building, development accuracy, and the like.

### [Designation of Edge in Point Cloud Data]

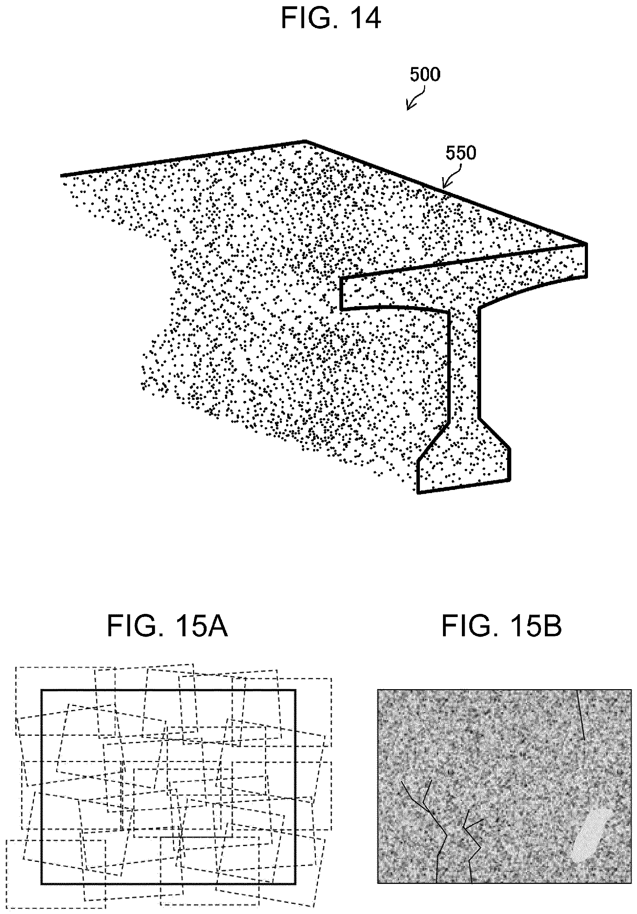

While Figs. 8A to 8C illustrate an example in which a development range and an edge are designated for a three-dimensional solid model, a development range and an edge may be designated for three-dimensional point cloud data. Fig. 14 is a diagram illustrating designation of an edge 550 for the point cloud 500. The development processing unit 108 can perform this designation in response to selection by the user with the mouse 320, for example.

### [Generation and Mapping of Composite Image]

If the three-dimensional model generated in step S120 is a model of only a shape, the mapping processing unit 112 (processor) can combine a plurality of images (captured images) (step S142: image combining process or image combining step) in a way described below and map the resulting image (composite image) to a two-dimensional image (or the original three-dimensional model) (step S144: mapping process or mapping step).

The mapping processing unit 112 can perform movement, rotation, deformation, or the like such that corresponding feature points between a plurality of images (captured images) can match to combine the images. This method is particularly effective for a planar object, and a high-quality image is obtained. The mapping processing unit 112 can also apply orthogonal projection to project a plurality of images onto the same plane or perform mosaic processing to combine the images. The orthogonal projection and the mosaic processing are effective for an object with irregularities. Accordingly, the mapping processing unit 112 may adopt an image combining method in accordance with the shape of the target (a photographic subject or a building).

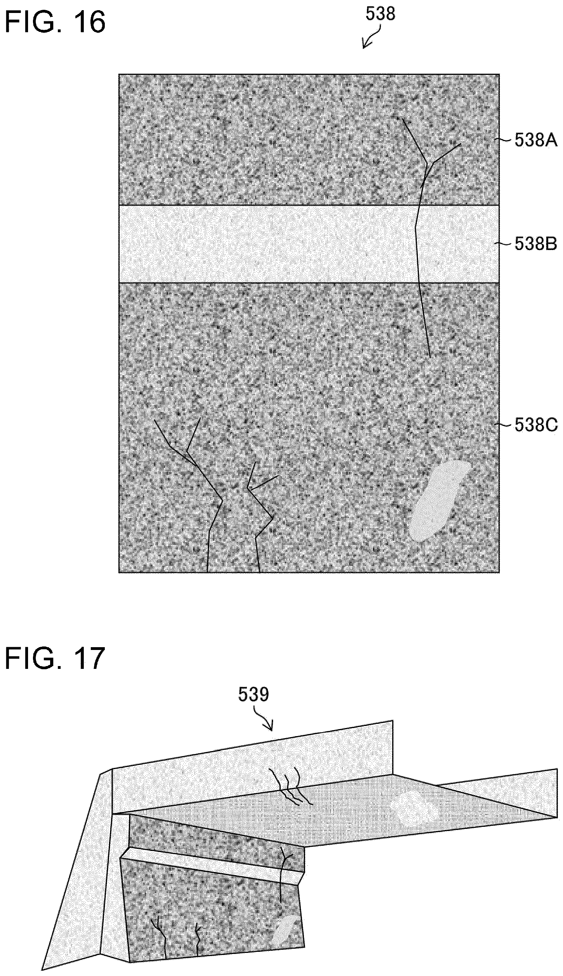

Alternatively, the mapping processing unit 112 can perform mapping by using, for example, surface mapping, UV mapping (mapping using the uv coordinate system in addition to the xyz coordinate system), plane mapping, plane projection, or the like. The mapping processing unit 112 may use a plurality of mapping methods in combination, or may selectively use a plurality of methods in accordance with the shape of the three-dimensional model. Figs. 15A and 15B are diagrams illustrating combining of images. In Fig. 15A, dotted-line boxes indicate the ranges of captured images, and a solid-line box indicates the range of a composite image. Fig. 15B illustrates an example of the composite image. Fig. 16 is a diagram illustrating a mapping image 538 obtained by mapping the composite image to a wall surface 535 of the leg 530. Regions 538A, 538B, and 538C are regions corresponding to the regions 534A, 534B, and 534C in Fig. 9 and the regions 535A, 535B, and 535C in Fig. 11, respectively.

The mapping processing unit 112 may generate a composite image from an image group constituting some of the captured images, or may generate a composite image from an image group selected by the user's operation or the like. For example, the mapping processing unit 112 can generate a composite image from high-quality images (for example, images with appropriate luminance, less noisy images with less blurring, or images captured from the front).

### [Mapping of Defect Information]

The mapping processing unit 112 (processor) can map the defect information extracted in step S110 to a two-dimensional image into which the three-dimensional model is developed or a two-dimensional image to which the composite image is mapped (step S150: mapping process or mapping step). The output processing unit 118 (processor) outputs the two-dimensional image obtained by mapping by displaying the two-dimensional image on the display device 20, storing the two-dimensional image in the storage device 200 (the two-dimensional developed image 210), or using any other method (step S160: output process or output step).

### [Mapping to Three-Dimensional Image]

The mapping processing unit 112 can also map the composite image to the three-dimensional model. Fig. 17 is a diagram illustrating a mapping image 539 obtained by mapping the composite image and the defect information to the three-dimensional model 510 illustrated in Figs. 8A to 8C.

### [Storage of Three-Dimensional Model]

The storage control processing unit 114 (processor) can store data indicating the generated three-dimensional model in the storage device 200 (memory) as the three-dimensional model data 206 in association with the captured images (the plurality of input images) and the specified member (step S170: storage control process or storage control step).

The processing unit 100 (processor) repeats the processes described above until YES is obtained in step S180.

Through the processing described above, the image processing system 1 enables the user to efficiently handle captured images of a building, a three-dimensional model of the building, and defect information.

### [Use of Existing Three-Dimensional Model]

While generation of a new three-dimensional model from captured images has been described with reference to the flowchart in Fig. 4, the generation processing unit 106 may read a three-dimensional model that has already been generated or acquired by a previous inspection or the like. That is, a three-dimensional model need not be generated every time an image is acquired. Fig. 18 is a flowchart illustrating a process (an aspect of an image processing method according to the present invention) using a generated three-dimensional model. In this flowchart, the acquisition processing unit 104 (processor) acquires a plurality of images obtained by capturing images of the building and having different dates and times of capture (for example, images having new dates and times of capture) from the plurality of images stored in the storage device 200 (memory) (previous images from which the three-dimensional model is generated) (step S102: acquisition process or acquisition step).

The generation processing unit 106 (processor) reads an existing three-dimensional model (step S122: reading process or reading step). The association processing unit 116 (processor) associates the plurality of images acquired in step S102 with the read existing three-dimensional model (step S124: association process or association step). The association processing unit 116 can perform the association process (association step) on the basis of, for example, a correlation between the plurality of acquired images and the plurality of images stored in the storage device 200. The subsequent processes (steps) are similar to those in the flowchart in Fig. 4.

Even when an existing three-dimensional model is used, extraction of defect information, development of the existing three-dimensional model into a two-dimensional image, mapping to the two-dimensional image or the three-dimensional model, and the like can be performed. The user can efficiently handle captured images of a building, a three-dimensional model of the building, and defect information by using an existing three-dimensional model.

While an embodiment of the present invention has been described, the present invention is not limited to the aspects described above, and various modifications may be made without departing from the scope of the appended independent claims.

### Reference Signs List

- 1: image processing system
- 10: image processing apparatus
- 20: display device
- 30: camera
- 100: processing unit
- 102: input processing unit
- 104: acquisition processing unit
- 106: generation processing unit
- 108: development processing unit
- 110: extraction processing unit
- 112: mapping processing unit
- 114: storage control processing unit
- 116: association processing unit
- 118: output processing unit
- 120: communication control unit
- 200: storage device
- 202: captured image
- 204: composite image
- 206: three-dimensional model data
- 208: defect information
- 210: two-dimensional developed image
- 300: operation unit
- 310: keyboard
- 320: mouse
- 500: point cloud
- 510: three-dimensional model
- 512: floor slab
- 514: wall
- 516: leg
- 520: floor slab
- 530: leg
- 532: left side surface
- 534: wall surface
- 534A: region
- 534B: region
- 534C: region
- 535: wall surface
- 535A: region
- 535B: region
- 535C: region
- 536: right side surface
- 537A: vector
- 537B: vector
- 537C: vector
- 538: mapping image
- 538A: region
- 538B: region
- 538C: region
- 539: mapping image
- 540: three-dimensional model
- 542: side surface
- 542A: region
- 543: rectangular region
- 544: plane
- 545: rectangular region
- 545A: region
- 546: plane
- 550: edge
- S100 to S180: steps of image processing method

## Claims

1. An image processing apparatus (10) comprising:
a processor (100); and
a memory (200) in which a plurality of images obtained by capturing images of a building and a three-dimensional model of the building are stored in association with each other, wherein
the processor (100) is configured to:
perform development of the three-dimensional model into a two-dimensional image;
extract defect information of the building on the basis of the plurality of images;
perform mapping of the defect information to the two-dimensional image; and
output the two-dimensional image to which the mapping is performed,
wherein the processor (100) is configured to perform the development of a designated range along a designated edge among edges of surfaces constituting the three-dimensional model, and
wherein the processor (100) is configured to receive**,** in accordance with a user operation, the designation of the edge and the range for the development.

2. The image processing apparatus (10) according to claim 1, wherein the processor (100) is configured to:
generate the three-dimensional model of the building on the basis of the plurality of images; and
store the three-dimensional model in the memory (200) in association with the plurality of images.

3. The image processing apparatus (10) according to claim 2, wherein the processor (100) is configured to reconstruct the generated three-dimensional model such that designated regions of the three-dimensional model are included in the same surface.

4. The image processing apparatus (10) according to any one of claims 1 to 3, wherein the processor (100) is configured to:
perform the development by dividing a designated region of the three-dimensional model into planes having a designated size.

5. The image processing apparatus (10) according to any one of claims 1 to 4, wherein the processor (100) is configured to align normal directions of regions constituting the two-dimensional image during the development.

6. The image processing apparatus (10) according to any one of claims 1 to 5, wherein the processor (100) is configured to perform the development on a designated portion of the three-dimensional model.

7. The image processing apparatus (10) according to any one of claims 1 to 6, wherein the processor (100) is configured to generate, as the three-dimensional model, at least one of a three-dimensional point cloud model, a three-dimensional mesh model, a three-dimensional surface model, or a three-dimensional solid model.

8. The image processing apparatus (10) according to any one of claims 1 to 7, wherein the processor (100) is configured to generate a three-dimensional point cloud model as the three-dimensional model and generate at least one of a three-dimensional mesh model, a three-dimensional surface model, or a three-dimensional solid model as the three-dimensional model on the basis of the three-dimensional point cloud model.

9. The image processing apparatus (10) according to any one of claims 1 to 8, wherein the processor (100) is configured to generate a composite image based on the plurality of images and perform mapping of the composite image to the two-dimensional image.

10. The image processing apparatus (10) according to claim 9, wherein the processor (100) is configured to generate the composite image such that feature points in the plurality of images match or the plurality of images are projected onto the same plane.

11. The image processing apparatus (10) according to any one of claims 1 to 10, wherein the processor (100) is configured to perform:
an acquisition process to acquire a plurality of images obtained by capturing images of the building, the plurality of images having different dates and times of capture from the plurality of images stored in the memory (200); and
an association process to associate the plurality of acquired images with the three-dimensional model stored in the memory (200).

12. The image processing apparatus (10) according to claim 11, wherein the processor (100) is configured to perform the association process on the basis of a correlation between the plurality of acquired images and the plurality of images stored in the memory (200).

13. An image processing method performed by an image processing apparatus (10) comprising
a processor (100), and
a memory (200) in which a plurality of images obtained by capturing images of a building and a three-dimensional model of the building are stored in association with each other,
the image processing method causing the processor (100) to perform a process including:
a development step of developing the three-dimensional model into a two-dimensional image;
an extraction step of extracting defect information of the building on the basis of the plurality of images;
a mapping step of performing mapping of the defect information to the two-dimensional image; and
an output step of outputting the two-dimensional image to which the mapping is performed,
wherein the processor (100) is configured to perform the development of a designated range along a designated edge among edges of surfaces constituting the three-dimensional model, and
wherein the processor (100) is configured to receive**,** in accordance with a user operation, the designation of the edge and the range for the development.

14. A computer readable recording medium storing an image processing program for causing a computer to execute the image processing method according to claim 13.

## Patentansprüche

1. Bildverarbeitungsvorrichtung (10), umfassend:
einen Prozessor (100); und
einen Speicher (200), in dem mehrere Bilder, die durch Aufnehmen von Bildern eines Gebäudes erhalten werden, und ein dreidimensionales Modell des Gebäudes in Verknüpfung miteinander gespeichert sind, wobei
der Prozessor (100) so konfiguriert ist, dass er:
Abwicklung des dreidimensionalen Modells in ein zweidimensionales Bild durchführt;
Defektinformationen des Gebäudes auf der Grundlage der mehreren Bilder extrahiert;
Mapping der Defektinformationen auf das zweidimensionale Bild durchführt; und
das zweidimensionale Bild, auf das das Mapping durchgeführt wird, ausgibt,
wobei der Prozessor (100) so konfiguriert ist, dass er die Abwicklung eines designierten Bereichs entlang einer designierten Kante unter Kanten von Flächen, die das dreidimensionale Modell bilden, durchführt, und
wobei der Prozessor (100) so konfiguriert ist, dass er in Übereinstimmung mit einer Benutzerbedienung die Designation der Kante und des Bereichs für die Abwicklung empfängt.

2. Bildverarbeitungsvorrichtung (10) nach Anspruch 1, wobei der Prozessor (100) so konfiguriert ist, dass er:
das dreidimensionale Modell des Gebäudes auf der Grundlage der mehreren Bilder erzeugt; und
das dreidimensionale Modell in dem Speicher (200) in Verknüpfung mit den mehreren Bildern speichert.

3. Bildverarbeitungsvorrichtung (10) nach Anspruch 2, wobei der Prozessor (100) so konfiguriert ist, dass er das erzeugte dreidimensionale Modell so rekonstruiert, dass designierte Bereiche des dreidimensionalen Modells in der gleichen Fläche enthalten sind.

4. Bildverarbeitungsvorrichtung (10) nach einem der Ansprüche 1 bis 3, wobei der Prozessor (100) so konfiguriert ist, dass er:
die Abwicklung durch Unterteilen eines designierten Bereichs des dreidimensionalen Modells in Ebenen mit einer designierten Größe durchführt.

5. Bildverarbeitungsvorrichtung (10) nach einem der Ansprüche 1 bis 4, wobei der Prozessor (100) so konfiguriert ist, dass er während der Abwicklung Normalenrichtungen von Bereichen, die das zweidimensionale Bild bilden, ausrichtet.

6. Bildverarbeitungsvorrichtung (10) nach einem der Ansprüche 1 bis 5, wobei der Prozessor (100) so konfiguriert ist, dass er die Abwicklung an einem designierten Abschnitt des dreidimensionalen Modells durchführt.

7. Bildverarbeitungsvorrichtung (10) nach einem der Ansprüche 1 bis 6, wobei der Prozessor (100) so konfiguriert ist, dass er als das dreidimensionale Modell mindestens eines von einem dreidimensionalen Punktwolkenmodell, einem dreidimensionalen Mesh-Modell, einem dreidimensionalen Oberflächenmodell und einem dreidimensionalen Festkörpermodell erzeugt.

8. Bildverarbeitungsvorrichtung (10) nach einem der Ansprüche 1 bis 7, wobei der Prozessor (100) so konfiguriert ist, dass er ein dreidimensionales Punktwolkenmodell als das dreidimensionale Modell erzeugt und mindestens eines von einem dreidimensionalen Mesh-Modell, einem dreidimensionalen Oberflächenmodell und einem dreidimensionalen Festkörpermodell als das dreidimensionale Modell auf der Grundlage des dreidimensionalen Punktwolkenmodells erzeugt.

9. Bildverarbeitungsvorrichtung (10) nach einem der Ansprüche 1 bis 8, wobei der Prozessor (100) so konfiguriert ist, dass er ein zusammengesetztes Bild auf der Grundlage der mehreren Bilder erzeugt und Mapping des zusammengesetzten Bildes auf das zweidimensionale Bild durchführt.

10. Bildverarbeitungsvorrichtung (10) nach Anspruch 9, wobei der Prozessor (100) so konfiguriert ist, dass er das zusammengesetzte Bild so erzeugt, dass Merkmalspunkte in den mehreren Bildern übereinstimmen oder die mehreren Bilder auf die gleiche Ebene projiziert werden.

11. Bildverarbeitungsvorrichtung (10) nach einem der Ansprüche 1 bis 10, wobei der Prozessor (100) so konfiguriert ist, dass er durchführt:
einen Erfassungsprozess zum Erfassen mehrerer Bilder, die durch Aufnehmen von Bildern des Gebäudes erhalten werden, wobei die mehreren Bilder unterschiedliche Aufnahmedaten und -uhrzeiten von den mehreren Bildern, die in dem Speicher (200) gespeichert sind, aufweisen; und
einen Zuordnungsprozess, um die mehreren erfassten Bilder dem in dem Speicher (200) gespeicherten dreidimensionalen Modell zuzuordnen.

12. Bildverarbeitungsvorrichtung (10) nach Anspruch 11, wobei der Prozessor (100) so konfiguriert ist, dass er den Zuordnungsprozess auf der Grundlage einer Korrelation zwischen den mehreren erfassten Bildern und den mehreren in dem Speicher (200) gespeicherten Bildern durchführt.

13. Bildverarbeitungsverfahren, das von einer Bildverarbeitungsvorrichtung (10) durchgeführt wird, umfassend:
einen Prozessor (100), und
einen Speicher (200), in dem mehrere Bilder, die durch Aufnehmen von Bildern eines Gebäudes erhalten werden, und ein dreidimensionales Modell des Gebäudes in Verknüpfung miteinander gespeichert sind,
wobei das Bildverarbeitungsverfahren den Prozessor (100) veranlasst, einen Prozess durchzuführen, der enthält:
einen Abwicklungsschritt des Abwickelns des dreidimensionalen Modells in ein zweidimensionales Bild;
einen Extraktionsschritt des Extrahierens von Defektinformationen des Gebäudes auf der Grundlage der mehreren Bilder;
einen Mappingschritt des Durchführens von Mapping der Defektinformationen auf das zweidimensionale Bild; und
einen Ausgabeschritt des Ausgebens des zweidimensionalen Bildes, auf das das Mapping durchgeführt wird,
wobei der Prozessor (100) so konfiguriert ist, dass er die Abwicklung eines designierten Bereichs entlang einer designierten Kante unter Kanten von Flächen, die das dreidimensionale Modell bilden, durchführt, und
wobei der Prozessor (100) so konfiguriert ist, dass er in Übereinstimmung mit einer Benutzerbedienung die Designation der Kante und des Bereichs für die Abwicklung empfängt.

14. Computerlesbares Aufzeichnungsmedium, das ein Bildverarbeitungsprogramm speichert, um einen Computer zu veranlassen, das Bildverarbeitungsverfahren nach Anspruch 13 auszuführen.

## Revendications

1. Appareil de traitement d'images (10) comprenant :
un processeur (100) ; et
une mémoire (200) dans laquelle une pluralité d'images obtenues par la capture d'images d'un bâtiment et un modèle tridimensionnel du bâtiment sont stockées en association les unes avec les autres, dans lequel
le processeur (100) est configuré pour :
effectuer un développement du modèle tridimensionnel en une image bidimensionnelle ;
extraire des informations de défaut du bâtiment sur la base de la pluralité d'images ;
effectuer une mise en correspondance des informations de défaut sur l'image bidimensionnelle ; et
sortir l'image bidimensionnelle sur laquelle la mise en correspondance est effectué, dans lequel le processeur (100) est configuré pour effectuer le développement d'une plage désignée le long d'un bord désigné parmi des bords de surfaces constituant le modèle tridimensionnel, et
dans lequel le processeur (100) est configuré pour recevoir, conformément à une opération utilisateur, la désignation du bord et de la plage pour le développement.

2. Appareil de traitement d'images (10) selon la revendication 1, dans lequel le processeur (100) est configuré pour :
générer le modèle tridimensionnel du bâtiment sur la base de la pluralité d'images ; et
stocker le modèle tridimensionnel dans la mémoire (200) en association avec la pluralité d'images.

3. Appareil de traitement d'images (10) selon la revendication 2, dans lequel le processeur (100) est configuré pour reconstruire le modèle tridimensionnel généré de sorte que des régions désignées du modèle tridimensionnel soient incluses dans la même surface.

4. Appareil de traitement d'images (10) selon l'une quelconque des revendications 1 à 3, dans lequel le processeur (100) est configuré pour :
effectuer le développement en divisant une région désignée du modèle tridimensionnel en plans ayant une taille désignée.

5. Appareil de traitement d'images (10) selon l'une quelconque des revendications 1 à 4, dans lequel le processeur (100) est configuré pour aligner des directions normales de régions constituant l'image bidimensionnelle pendant le développement.

6. Appareil de traitement d'images (10) selon l'une quelconque des revendications 1 à 5, dans lequel le processeur (100) est configuré pour effectuer le développement sur une portion désignée du modèle tridimensionnel.

7. Appareil de traitement d'images (10) selon l'une quelconque des revendications 1 à 6, dans lequel le processeur (100) est configuré pour générer, comme modèle tridimensionnel, au moins l'un parmi un modèle de nuage de points tridimensionnel, un modèle de maillage tridimensionnel, un modèle de surface tridimensionnel ou un modèle solide tridimensionnel.

8. Appareil de traitement d'images (10) selon l'une quelconque des revendications 1 à 7, dans lequel le processeur (100) est configuré pour générer un modèle de nuage de points tridimensionnel comme modèle tridimensionnel et générer au moins l'un parmi un modèle de maillage tridimensionnel, un modèle de surface tridimensionnel ou un modèle solide tridimensionnel comme modèle tridimensionnel sur la base du modèle de nuage de points tridimensionnel.

9. Appareil de traitement d'images (10) selon l'une quelconque des revendications 1 à 8, dans lequel le processeur (100) est configuré pour générer une image composite sur la base de la pluralité d'images et effectuer une mise en correspondance de l'image composite sur l'image bidimensionnelle.

10. Appareil de traitement d'images (10) selon la revendication 9, dans lequel le processeur (100) est configuré pour générer l'image composite de sorte que des points caractéristiques dans la pluralité d'images coïncident ou que la pluralité d'images soient projetées sur le même plan.

11. Appareil de traitement d'images (10) selon l'une quelconque des revendications 1 à 10, dans lequel le processeur (100) est configuré pour effectuer :
un processus d'acquisition destinée à acquérir une pluralité d'images obtenues par la capture d'images du bâtiment, la pluralité d'images ayant des dates et des heures de capture différentes de celles de la pluralité d'images stockées dans la mémoire (200) ; et
un processus d'association destinée à associer la pluralité d'images acquises au modèle tridimensionnel stocké dans la mémoire (200).

12. Appareil de traitement d'images (10) selon la revendication 11, dans lequel le processeur (100) est configuré pour effectuer le processus d'association sur la base d'une corrélation entre la pluralité d'images acquises et la pluralité d'images stockées dans la mémoire (200).

13. Procédé de traitement d'images effectué par un appareil de traitement d'images (10) comprenant
un processeur (100), et
une mémoire (200) dans laquelle une pluralité d'images obtenues par la capture d'images d'un bâtiment et un modèle tridimensionnel du bâtiment sont stockées en association les unes avec les autres,
le procédé de traitement d'images amenant le processeur (100) à effectuer un processus incluant :
une étape de développement consistant à développer le modèle tridimensionnel en une image bidimensionnelle ;
une étape d'extraction consistant à extraire des informations de défaut du bâtiment sur la base de la pluralité d'images ;
une étape de mise en correspondance consistant à effectuer une mise en correspondance des informations de défaut sur l'image bidimensionnelle ; et
une étape de sortie consistant à sortir l'image bidimensionnelle sur laquelle la mise en correspondance est effectué,
dans lequel le processeur (100) est configuré pour effectuer le développement d'une plage désignée le long d'un bord désigné parmi des bords de surfaces constituant le modèle tridimensionnel, et
dans lequel le processeur (100) est configuré pour recevoir, conformément à une opération utilisateur, la désignation du bord et de la plage pour le développement.

14. Support d'enregistrement lisible par ordinateur stockant un programme de traitement d'images destiné à amener un ordinateur à exécuter le procédé de traitement d'images selon la revendication 13.
